# EUROPEAN PATENT APPLICATION

(11) **EP 1 067 286 A1**
(43) Date of publication of application: **10.01.2001**
(21) Application number: 98932668.1
(22) Date of filing: 30.06.1998
(51) Int. Cl.: F03D 1/04, F03D 9/00

(54) **WINDMILL POWERPLANT**

(30) Priority: 25.03.1998 RU 98104527
(71) Applicant: Orlov, Igor Sergeevich, Moscow, 111141 (RU); Sobol, Emmanuil Avraamovich, Moscow, 121165 (RU); Egorov, Mikhail Andreevich, Moscow, 115563 (RU)
(72) Inventor: Orlov, Igor Sergeevich, Moscow, 111141 (RU); Sobol, Emmanuil Avraamovich, Moscow, 121165 (RU); Egorov, Mikhail Andreevich, Moscow, 115563 (RU)
(74) Representative: Devons, David Jon
(86) International application number: PCT/RU98/00199
(87) International publication number: WO 99/49214

(57) **Abstract**

The present invention relates to a method for converting air-flow energy, which comprises using the energy of free air flows (Vo) around a device and subsequently expanding the air flows in order to obtain a speed of the air flow on the working blades of a turbine which is close to the speed of sound and with a constant rotational frequency of the generator. The air flows (Vₒ, V₁, V₂) circulating around the device generate a depression at the outlet section of an annular gap between the inner surface of the external envelope and the surface of the central body. This device comprises an external envelope as well as a central body which is mounted on the symmetry axis of said device and has an electrical generator fitted inside. The generator has a turbine mounted on its shaft with a convergent tube in front of it. Annular gaps are provided between the central body and the fairing, between the inner surface of the external envelope and the outer surface of the fairing, and between the inner surface of the external envelope and the surface of the central body, wherein said annular gaps increase the kinetic energy of the flow using its internal energy and the pressure energy.

## Description

The present invention relates to power engineering and represents a wind power unit and to a method for converting of wind power to electrical or other energy to be used in industry, agriculture, etc.

Wind power units using kinetic energy of air flows by direct wind effect on the blades of wind wheel or turbine have been long known in the art /1/.

To increase efficiency of the known units pressure of input flow before the wind wheel is changed using diffusers and other structures of various geometric shape, that direct air flows.

Units converting kinetic energy of air flows by direct effect on the wind wheel. Darrier rotors and other, have an essential disadvantage: blades are affected by irregular air flow, that creates variable dynamic loads resulting in instability of generated electric current parameters.

Significant power losses are related to application of multipliers to increase the speed of rotation of the generator rotor (1).

Use of double effect on the turbine of accelerated flow and rarefaction from the output channel side was proposed to increase the efficiency of wind power-generating units (2).

The station described in the patent (2) contains a turbine, a power generator, an unit to direct the air flow to the turbine made in form of a confuser and a unit for removing the air flow from behind the turbine connected to the reduced pressure zone.

Air intake parts of the station form channels that narrow in the middle part and are made to input external air flows from two sides. A separator distributes the air flow entering the channel into two inlet and outlet channels. One flow through the inlet orifice is directed with a 270 degree turn to an accumulation chamber where the power generator, the multiplier, and the turbine are installed. Exhaust pipe of the latter is located in the air outlet chamber. The second flow accelerated in the channel creates rarefaction in the narrow section of the channel and provides output of' the flow from the outlet chamber through a system of air ducts with several turns into the outlet opening.

This station loses power in the flow coming to the accumulation chamber and to the turbine through the outlet opening due to several turns of the flow, that create irregular fields of velocity, pressure and temperature in the accumulation chamber. Besides, a cumbersome multiplier in the input pipe of the turbine increases irregularity of the flow along the perimeter of the turbine input pipe. The multiplier also causes additional mechanical losses.

Irregularity of the flow in the outlet chamber and flow turn by 270 degrees from the exit pipe of the turbine to the outlet opening prevent high efficiency of the air flow energy transformation. Practical use of the device in stationary embodiment installed on the basement is extremely limited due to impossibility of orientation of the station in accord with change of the wind direction.

An embodiment of the station described in the specification to the patent /2/ installed on a tower also fails to provide self-orientation to direction of the wind.

Such design fails to provide possibility of using the power of air flows streamlining the unit. Besides, the input and output channels supplying the flow to the chambers are located either laterally or in the middle of the unit, rather than on the entire channel perimeter. This precludes use of the flow internal energy and the pressure energy thereof.

More perfect wind power-generating unit /3/ (known art prototype) contains an external shell, a central body installed on the axis of symmetry of the unit inside of which a power generator is located. The generator shaft bears a turbine preceded by the confusor. Annular gaps between the central body and the cowl, internal surface of the external shell and the outside surface of the cowl and the internal surface of the external shell and the outside surface of the central body provide increase of velocity of the air flow in the channel minimum cross-sections and allow to increase its kinetic energy through reduction of its internal and pressure energy. The unit substantially comprises two stages which provide increase of the flow velocity at drop of pressure in the channel minimum cross-sections. The boost of flows in minimum cross-sections is achieved under the effect of rarefaction energy in the basement cut of the unit, and due to the energy coming to the air flow nozzle (first stage) and under the effect of rarefaction in the output cross-section of the exhaust pipe of the air turbine and the energy of the air flow coming to the input nozzle of the turbine (second stage).

However, a stable operational mode of this unit may be achieved only with rather large air flow velocities.

The stated disadvantage is significantly eliminated in the present invention providing a wind power-generating unit in form of a power unit mounted on a support comprising at least one turbine with nozzle apparatus mechanically connected to one or several generators, a central shell, an annular front shell with at least one input channel of the turbine forming an output channel with the central shell of the turbine and an annular external shell forming a diffuser output channel with the central shell, the power-generating unit being equipped with an additional annular shell forming with the external surfaces of the front and central shells a narrowing and expanding first intermediate channel connected in its intermediate part with the output channel of the turbine, and with the internal surface of the outside shell a second intermediate channel being connected, along with the first intermediate channel, to the diffuser output channel, the back edge of the outside shell coincides with its maximum diameter, the input channel and the turbine are located in the center of the front shell, input channels and turbines are located on the lateral perimeter in the front shell, the generator being equipped with cowl and is located in front of the turbine, the generator is located behind the turbine in the central shell, the turbine is equipped with two or several generators, the output part of the additional shell is made movable to change cross-section of adjacent channels, the output part of the front shell is made movable to change cross-section of adjacent channels, the trailing edge in its meridian plane has the angle of tangent declination to the external surface of the outside shell equal to 90-120 degrees relative to the plane of the basement cut of the shell, the support is made as a joint installed on the top of the column, rotation axis of the joint is located along the wind flow in front of the center of power-generating unit wind pressure, at least one of the shells is filled with gas of lover density, than that of the ambient atmosphere, the support is made as a cable attached to the front part of the front shell, the cable is installed horizontally or with a slant and its ends are attached at artificial or natural heights, while the power-generating unit is equipped with wings.

The invention is explained by the drawings.
Fig. 1 shows the power-generating unit of the wind power unit.
Fig. 2 shows embodiment of the power-generating unit with several turbines.
Fig. 3 shows axonometric projection of the power-generating unit in Fig. 2.
Fig. 4 shows joint attachment of the power-generating unit on the column.
Fig. 5 shows the attachment to a cable of the power-generating unit in aerostat version.
Fig. 6 shows the power-generating unit with wings.
Fig. 7 illustrates attachment of the power-generating unit on a horizontal or sloped cable.

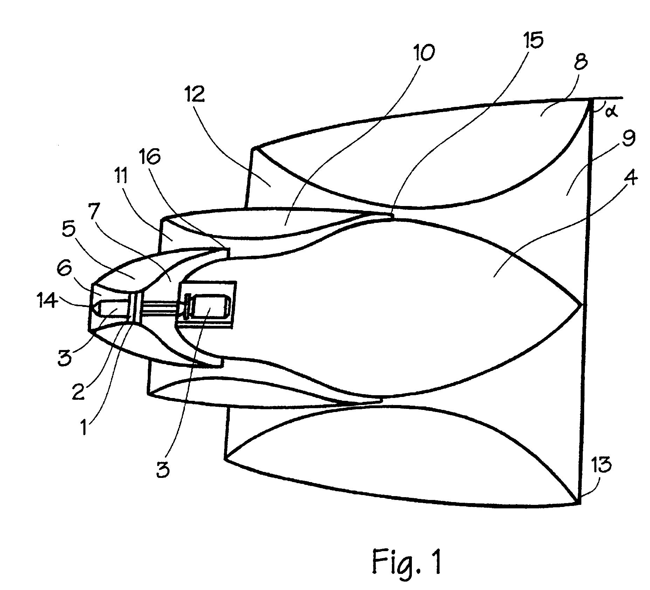

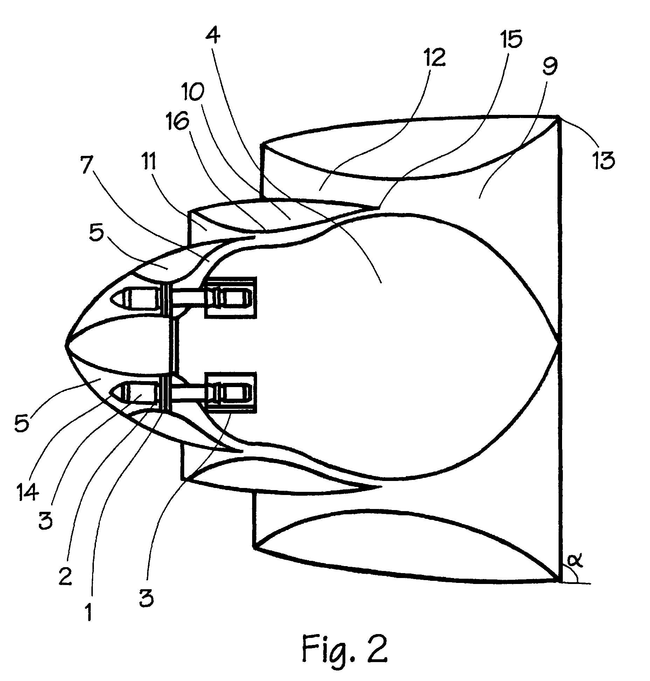

The wind power unit is made as a power-generating unit installed on a support containing at least one turbine 1 with a nozzle apparatus 2. The shaft of turbine 1 is mechanically connected to generator 3. The term "Generator" should be understood not only as a electrical current generator but as any device converting mechanical energy into any kind of energy convenient for use in particular circumstances. It can be, for example, a pump in a hydraulic drive system, a pneumatic drive compressor, etc. The power-generating unit also contains a central shell 4, an annular front shell 5 with at least one input channel 6 of the turbine 1 forming with the central shell 4 an output channel 7 of the turbine 1, and an annular external shell 8 forming with the central shell 4 a diffuser output channel 9. The feature of the power-generating unit is in that, it is equipped with additional annular shell 10 forming with the external surfaces of the front 5 and central 4 shells a narrowing-extending first intermediate channel 11 connected in the middle part with the output channel 7 of the turbine 3, and with the internal surface of the external shell 8 forming a second intermediate channel 12 connected along with the intermediate channel 11 to the diffuser output channel 9. Back edge 13 of the external shells 8 coincides with the maximum diameter thereof. In one of the embodiments /see Fig. 1/ the input channel 6 and the turbine 1 are located in the center of the front shell 5. In other embodiment /see Fig. 2/ the input channels 6 and the turbines 1 are located on the lateral perimeter in the front shell 5. The generator 3 may be located behind the turbine 1 and in front of it. In the latter case, the generator 3 is equipped with a cowl 14. In all embodiments, the turbine may be connected to one or several generators located behind the turbine or in front of it.

The output part 15 of the additional shell 10 may be made movable /i.e. rotational or axial displaceable/ to change cross-section of the adjacent channels 11 and 12, while the output part 16 of the front shell 5 is made movable to change cross-section of the adjacent channels 7 and 11. Parts 15 and 16 may be designed adjustable, i.e. with rotary doors and inserts.

In the back edge 13 meridian plane, angle α of the tangent declination to the external surface of the outside shell 8 equals to 90-120 degrees with respect to the basement cut of the shell /see Fig. 1/.

The support of the power-generating unit may be made as a joint 18 (e.g., cylindrical) installed on the top of the column 17. Joint rotation axis is located by the wind flow in front of the center of wind pressure P of the power-generating unit and in the same plane with it. P is a point of application of the resultant aerodynamic forces acting on the power-generating unit in streamlined thereof by the wind flow. Such design provides turning of the power-generating unit to the wind with any direction of the latter.

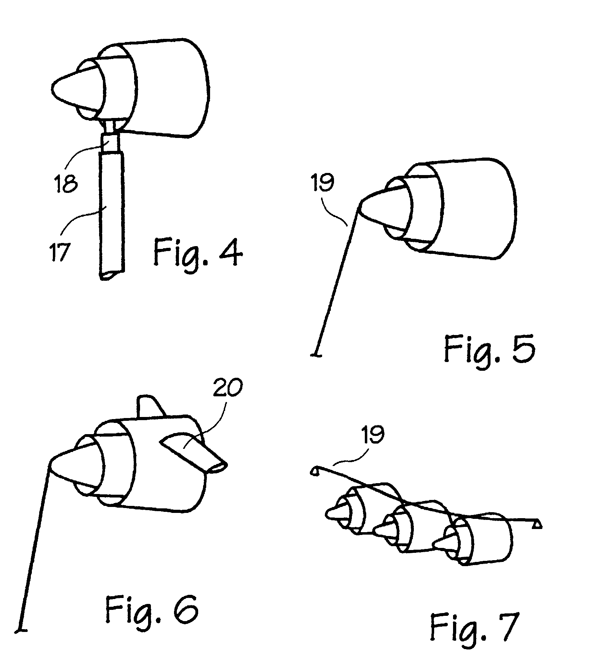

At least one of the shells of the power-generating unit may be filled with gas having lover density than that of the ambient atmosphere /aerostatic embodiment/. In this case the power-generating unit support may be made as a cable 19 with one end being fixed to the ground and the other to the nose part of the front shell 5 /see Fig. 5/. The cable 19 may be installed horizontally or with a slope and the ends thereof being attached to artificial or natural heights /sec Fig. 7/. As shown in Fig. 6, the power-generating unit may have wings 20 to create additional lift in the wind.

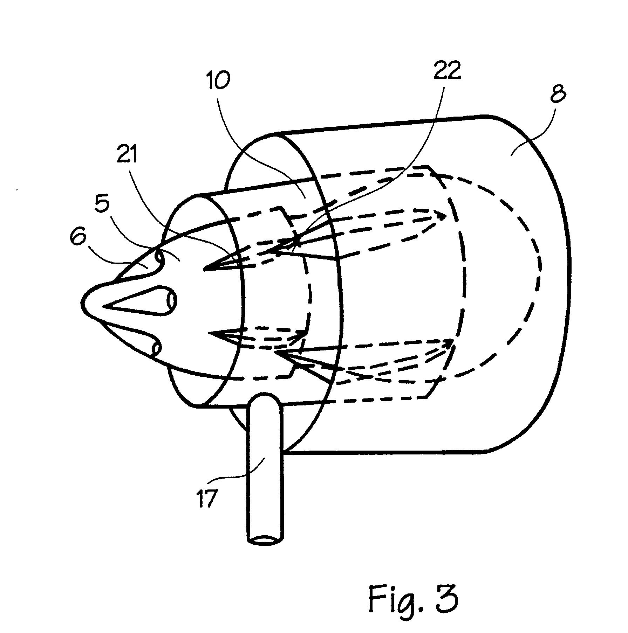

The shells of the power-generating unit are connected with help of strips 21 and 22 in an integrated construction, as shown in Fig. 3.

The wind power unit operates as follows.

A free air flow moving along the surface of the external shell 8 of the unit creates, through ejection, rarefaction on the unit basement cut. The zone of effective influence of the flow creating rarefaction equals to at least one diameter of the unit basement cut, that is the process involves annular air flow which largest diameter is not less, than three diameters of the unit basement cut. Energy of the flow may be determined by the first law of thermodynamics, or calculate using the equation for determination of gas elastic energy, or through other known methods.

The air flow incoming to the input section of the channel 12 has a certain reserve of energy calculated by known methods.

Under effect of the two energy flows - from the side of the input channel and from the side of the basement cut - the air flow reaches its maximum velocity in the minimum cross-section of the channel 12 in the zone of back edge 15 of the additional shells 10. That is, kinetic energy of the flow sharply increases, and the process is related to reduction of flow enthalpy. With increase of the velocity, the pressure in this cross-section reduces, and we designate the value of pressure as P1. This pressure will be significantly lower, than the pressure P0 in the free flow. Pressure in the output section of channel 11 will also be equal to P1. Thus, the air channel 11 is also affected by two energies: one from the side of the output section of channel 11 and the other from the side of input cross-section thereof. Vectors of effect of these energies on the flow coincide. Interaction of these energies causes essential increase of velocity in the minimun cross-section of the channel 11 (in the back edge zone of the front shell 5) and appropriate reduction of the pressure in the zone. Thus, if assume, that the pressure in the output part of the channel 12 is P1 = 0.85... 0.9 P0, the pressure P2 in the minimum cross-section zone of the channel 11 will be P2 = 0.7... 0.75 P0.

Pressure in the output cross-section of the air channel 6 will also be equal P2. In the minimum cross-section of the channel 6 the air turbine 1 being installed with directing nozzle apparatus 2 and in this cross-section (in the turbine) the air flow velocity, through interaction of energy of the air flow coming to the channel of 6 and rarefaction in the output cross-section of the channel 6, will reach its maximum value - local speed of sound or will be close to it. Kinetic energy in the turbine 1 represents available work which will be transformed into rotation of the turbine 1 and electrical generators 3 connected thereto.

Processes of energy transformation in the channels of the unit are identical to those occurring in Laval nozzles, and the minimum flow pressure in the working zone of the turbine will be equal to P3 = 0.528 P0 or will be a little higher depending on free flow velocity. Air turbines are efficient even at minor pressure differentials, and the unit will operate at free air flow velocities of V0 = 5...7 m/s but amount of generated electric power will be less.

Thus, the suggested wind power unit, unlike the prior art considered above (see 2 and 3) allows to use energy of the wind flows streamlining the unit. Unlike the prior art (4), it provides more effective stepwise conversion of the air flows energy resulted from simultaneous interaction on the air flows in the channels of both the energy of flows incoming to the channels and the energy of rarefaction in the output cross-sections thereof.

The proposed wind power units could be most effectively used in the regions with increased wind velocities, e.g. on islands, on sea coast, in mountains, etc.

The units may be installed in various embodiments (Fig. 7) - on columns (towers), suspended as garlands on cables, fixed on any support (in gorges). In regions where the average velocities are insignificant the aerostat embodiment of the unit may be used by filling its sealed shells with, e.g., helium, or using heated air inside the shells, or using other known methods.

The existing development in the field of electrical engineering allows to use in the unit, virtually without changes, industrial production high-speed electric generators, industrial production air turbines complete with nozzle directing apparatuses, e.g. air turbines of power-generating units of airplanes and other aircraft, turbodetander units, etc. To reduce time and cost of assembling the units *in situ*, it is advisable to produce turbine generator units fully assembled, i.e. in full factory readiness. Weight of a high-speed 1000 kW power generator does not exceed 700 kg, while the gross weight of a turbine generator unit of some power will be hardly more, than one ton. Shells of the units may be made of various materials according to well developed processes, depending on the unit power and the type: composite materials, aluminum alloy rolled stock, plastics, etc. The shells may be modular, inflatable, etc.

### References

1. Wind Power Engineering. Ed. D. de Renzo, Moscow, Energoatomizdat 1982, pages 81-96.
2. Patent of Japan 62-11190, F03D 1/00, 1987.
3. Specification of the Application PCT/RU 00131, publ. VOIS 06.11.97 (known art prototype).

## Claims

1. A wind power unit in form of a in form of a power unit mounted on a support comprising at least one turbine (1) with nozzle apparatus (2) mechanically connected to a generator (3), a central shell (4), an annular front shell (5) with at least one input channel (6) of the turbine (1) forming an output channel (7) with the central shell (4) of the turbine (1) and an annular external shell (8) forming a diffuser output channel (9) with the central shell (4), characterized in that the power-generating unit being equipped with an additional annular shell (10) forming with the external surfaces of the front and central shells (4, 5) a narrowing and expanding first intermediate channel (11) connected in its intermediate part with the output channel (7) of the turbine (1), and with the internal surface of the outside shell (8) a second intermediate channel (12) being connected, along with the first intermediate channel (11), to the diffuser output channel (9).

2. The wind power unit according to Claim 1, characterized in that the back edge (13) of the external shell (8) coincides with the maximum diameter thereof.

3. The wind power unit according to Claim 1 or 2, characterized in that the input channel (6) and the turbine (1) are located in the center of the front shell (5).

4. The wind power unit according to Claim 1, characterized in that the input channels (6) and the turbines (1) are located on the lateral perimeter in the front shell (5).

5. The wind power unit according to Claim 1, characterized in that the generator (3) is equipped with a cowl (14) and located in the central shell (4) in front of the turbine (1) or behind the turbine (1).

6. The wind power unit according to Claim 1, characterized in that the turbine (1) is equipped with two or more generators (3) being located both in front of the turbine (1) and behind thereof.

7. The wind power unit according to any Claim 1-6 characterized in that the output part (15) of the additional shell (10) is made movable to change cross-section of the adjacent channels (11, 12).

8. The wind power unit according to any Claim 1-7, characterized in that the output part (16) of the front shell (5) is made movable to change cross-section of the adjacent channels (7,11)

9. The wind power unit according to any Claim 1-8, characterized in that at the back edge (13) in the meridian plane the angel (α) of tangent declination to the external surface of the external shell (8) equals to 90-120 degrees with respect to the plane of the basement cut of the shell.

10. The wind power unit according to Claim 1, characterized in that the support is made as a joint (18) installed on the top of a column (17) and the joint rotation axis is located by the wind flow in front of the center of wind pressure P of the power-generating unit.

11. The wind power unit according to Claim 1, characterized in that at least one shell (4; 5; 8; 10) is filled with gas having lower density than that of air.

12. The wind power unit according to Claim 1, characterized in that the support is made as a cable (19) fixed to the nose of the front shell (5).

13. The wind power unit according to Claim 12, characterized in that the cable (19) is installed horizontally or with a slope and its ends are fixed at artificial or natural heights.

14. The wind power unit according to any Claim 1-13, characterized in that wings (20) are attached to the power-generated unit.

15. A method for converting energy of a gathered-speed gas stream, preferably a wind strem, into another kind of energy by directing said stream onto blades of a turbine (1) that has a nozzle apparatus (2) including a central shell (4), an annular front shell (5) at least one input channel (6) of the turbine (1), said annular front shell (5) forming an output channel (7) of the turbine with the central shell (4), and an annular external shell (8) forming a diffuser output channel (9) with the central shell (4), wherein rarefaction is created in the gas stream behind the turbine (1), characterized in that a least one additional stage of gas stream acceleration is created in the output channel of the turbine (1), while simultaneously providing additional rarefaction in the gas stream directly behind the turbine (1).
